# EUROPÄISCHE PATENTSCHRIFT

(11) **EP 2 179 188 B1**
(45) Veröffentlichungstag und Bekanntmachung des Hinweises auf die Patenterteilung: **25.09.2013**
(21) Anmeldenummer: 08773884.5
(22) Anmeldetag: 05.07.2008
(51) Int. Cl.: F16C 23/04, B01F 15/00

(54) **GLEITLAGER UND REAKTOR HIERMIT**
SLIDING BEARING AND REACTOR THEREWITH
PALIER LISSE ET RÉACTEUR ÉQUIPÉ DE CE DERNIER

(30) Priorität: 20.07.2007 DE 102007034463
(43) Veröffentlichungstag der Anmeldung: 28.04.2010
(73) Patentinhaber: Sanofi-Aventis Deutschland GmbH, 65929 Frankfurt am Main (DE)
(72) Erfinder: SITTIG, Wolfgang, 65719 Hofheim (DE); EISBRENNER, Guenter, 65926 Frankfurt am Main (DE); ZIMMERMANN, Jürgen, 65926 Frankfurt am Main (DE)
(86) Internationale Anmeldenummer: PCT/EP2008/005511
(87) Internationale Veröffentlichungsnummer: WO 2009/021583

(56) Entgegenhaltungen:
- EP-A1- 1 098 096
- JP-A- 8 093 672
- US-A- 4 013 274
- US-A- 4 932 787

## Beschreibung

Die Erfindung betrifft ein Gleitlager, insbesondere ein Rührwerkbodenlager für einen Reaktor, mit einem hülsenförmigen Lageraußenteil, das eine zylindrische Innenkontur aufweist, und einem in diesem geführten, zapfenartigen Lagerinnenteil, wobei die Innenkontur des Lageraußenteils derart an die Außenkontur des Lagerinnenteils angepasst ist, dass zwischen diesen ein ringförmiger Lagerspalt zur Aufnahme eines als Schmiermittel wirkenden Fluids ausgebildet ist und wobei sich das Lagerinnenteil und das Lageraußenteil immer nur an einem Punkt berühren, der auf dem inneren Durchmesser abrollt. Weiter betrifft die Erfindung einen Reaktor mit einem derartigen Gleitlager sowie die Verwendung eines Gleitlagers.

Aus der DD 254 978 A1 ist ein Gleitlager der eingangs genannten Art bekannt, welches zur Lagerung von Kurbelwellen in Brennkraftmaschinen eingesetzt werden soll. Bei diesem Gleitlager sind sowohl das Lagerinnenteil als auch das Lageraußenteil im Wesentlichen zylindrisch gestaltet, wobei es durch fertigungstechnische Toleranzen zu einer geringfügig konvexen oder konkaven Abweichung von der ideal zylindrischen Gestaltung des Lagerinnenteils oder des Lageraußenteils kommen kann. Um Reibungsverluste sowie die Störanfälligkeit des bekannten Lagers zu reduzieren und dessen Lebensdauer zu erhöhen, wird in der DD 254 978 A1 vorgeschlagen, dass bei einem zylindrisch ausgeführten Lagerzapfen anstelle der üblichen toleranzbedingten, in gleicher Größe zwischen konvex und konkav variierenden Abweichung von der Zylinderform eine extrem konkave Abweichung von der Zylinderform gewählt werden soll, so dass die den zylindrischen Durchmesser unterschreitende konkave Grenzlinie die übliche Toleranzlinie im mittleren Bereich der Lagerbreite um wenigstens 50% unterschreitet. In gleicher Weise soll auch das Lageraußenteil eine konkave Form aufweisen.

Bei der Verwendung eines derartigen Gleitlagers als produktgeschmiertes Gleitlager in einem Reaktor, wie beispielsweise einem Fermentationsreaktor zum Durchmischen einer belüfteten Fermentationslösung, besteht die Gefahr, dass sich in dem Produkt Blasen bilden, die schlagartig zusammenbrechen können. Dieses Phänomen wird als Kavitation bezeichnet und führt dazu, dass eine ausreichende Schmierung des Gleitlagers nicht erfolgt, so dass teilweise das Lagerinnenteil und das Lageraußenteil trocken aufeinander reiben, wodurch ein sehr hoher Verschleiß entsteht, der die Lebensdauer eines derartigen Gleitlagers stark verkürzt.

Weiter sind aus der US 5,518,319 und der DE 1 829 609 U Gleitlager bekannt, bei welchen das Lagerinnenteil stark konkav oder stark konvex ausgebildet ist, während gleichzeitig das Lageraußenteil entsprechend stark konvex bzw. stark konkav gestaltet ist. Der zwischen Lagerinnenteil und Lageraußenteil verbleibende Lagerspalt, der mit einem unter Druck stehenden Schmierstoff versorgt wird, ist dabei in der gesamten Lageranordnung im Wesentlichen gleich groß. Hierdurch können die oben beschriebenen Probleme beim schlagartigen Zusammenbrechen von Dampfblasen auftreten, wenn das Gleitlager als ein produktgeschmiertes Gleitlager in einem Fermentationsreaktor eingesetzt wird. Weiter besteht die Gefahr, dass das Lagerinnenteil und das Lageraußenteil ineinander verkanten.

In der DE 100 27 343 A1 wird ein Fußlager für Rührwellen vorgeschlagen, welches ebenfalls als ein Gleitlager ausgebildet ist. Um zu verhindern, dass beispielsweise abrasive Materialien in den Lagerspalt zwischen dem Lagerinnenteil und dem Lageraußenteil eindringen können, wird durch das Lagerinnenteil eine Spülflüssigkeit unter Druck zugeführt, die den Lagerspalt füllt und ein Eindringen anderer Stoffe erschwert. Zudem besteht bei diesem bekannten Lager bei der Verwendung vergleichsweise langer Wellen die Gefahr, dass Eigenschwingungen, welche als Torsionsschwingungen die Drehbewegung überlagern und als Biegeschwingung von der Drehung unabhängig sein können, auftreten können. Die Biegeschwingungen verursachen hierbei eine hochfrequente Längsbewegung des Wellenendes, die wiederum zu einer schabenden Relativbewegung zwischen dem Lagerinnenteil und dem Lageraußenteil führt. Hierbei drücken auf das Lager teilweise erhebliche Kräfte, die in Kombination mit der Gefahr des Zusammenbrechens von Blasen in dem als Schmierstoff eingesetzten Fluid zu einer vorzeitig eintretenden Zerstörung der Werkstoffe führen kann.

US 4,013,274 beschreibt ein Lager als Teil einer Vorrichtung zur Führung und Lagerung einer Rührerwelle für Labor- bzw. Technikums-Glasgeräte, welche aus Lager und Widerlager besteht und wobei das Lager aus einer ebenen Scheibe mit einer mittig angeordneten, kugelförmigen Aussparung, an deren tiefster Stelle eine die Scheibe durchbrechende konische Bohrung angeordnet ist, und einem Körper mit einer kugelförmigen Oberfläche und einer zentralen, axialen Durchbohrung, welche in die kugelförmige Aussparung der Scheibe drehbar eingepasst ist, besteht, wobei die Rührerwelle in der Durchbohrung des Körpers so befestigt werden kann, das sie durch die Bohrung in der Scheibe hindurchragt und in dem Widerlager Halt hat. Die Merkmale des Oberbegriffs von Anspruch 1 sind aus diesem Dokument bekannt.

JP 08 093672A beschreibt ein Lager als Teil eines Spiralkompressors mit einer Anordnung aus Fest- und Loslager, wobei das Loslager tonnenförmig ausgebildet ist.

Aufgabe der vorliegenden Erfindung ist es demgegenüber, ein Gleitlager der eingangs genannten Art sowie einen Reaktor bereitzustellen, bei welchem auch sehr lange Wellen in belüfteten Fermentationslösungen, die als Schmiermittel des Gleitlagers dienen, mit verbesserter Lebensdauer betrieben werden können.

Diese Aufgabe wird erfindungsgemäß im Wesentlichen dadurch gelöst, dass das Lagerinnenteil des Gleitlagers eine zumindest bereichsweise ballige, konvexe Außenkontur aufweist. Bei dieser Ausgestaltung des Gleitlagers mit einem zylindrischen Lageraußenteil und einem balligen, konvexen Lagerinnenteil berühren sich das Lagerinnenteil und das Lageraußenteil immer nur an einem Punkt, der auf dem inneren Durchmesser abrollt. Ein Verkanten des Lagerinnenteils in dem Lageraußenteil kann hierdurch nicht mehr auftreten. Auch bei einer durch Biegeschwingungen auftretenden Längsbewegung wird zwangsläufig ein Keil des als Schmiermittel dienenden Fluids durch den Lagerspalt geschoben und komprimiert, wodurch der Gefahr des Auftretens einer Kavitation entgegengewirkt wird. Die oben beschriebenen beim Stand der Technik auftretenden Probleme der trockenen Reibung und der Kavitation treten bei der erfindungsgemäßen Ausgestaltung des Gleitlagers nicht mehr auf oder nur noch so weit abgemindert, dass sich die Standzeit des Lagers in den Bereich des normalen Verschleißes erhöhen lässt.

Nach einer bevorzugten Ausführungsform der Erfindung ist die ballige, konvexe Außenkontur des Lagerinnenteils als ein schlankes Ellipsoidsegment ausgebildet. Diese Gestaltung der Außenkontur des Lagerinnenteils hat sich als besonders vorteilhaft erwiesen, um eine Kavitation und eine trockene Reibung zu vermeiden.

Die Außenkontur des Lagerinnenteils muss nicht über die gesamte Höhe des Lagers ballig und konvex ausgebildet sein, sondern es ist ausreichend, wenn ein Bereich der Außenkontur des Lagerinnenteils ballig konvex ausgebildet ist. Dabei wird es bevorzugt, dass ein Äquator des balligen, konvex ausgebildeten Bereichs etwa in dessen Mitte angeordnet ist. Dies wirkt einem Verkanten des Lagerinnenteils in dem Lageraußenteil entgegen.

Um möglichst dauerhaft einen Fluidfilm in dem Lagerspalt auszubilden, weist das Lageraußenteil vorzugsweise wenigstens eine Öffnung zur Herstellung einer Strömungsverbindung zwischen dem Lagerspalt und der äußeren Umgebung des Lageraußenteils auf. Nach einer besonders bevorzugten Ausführungsform der Erfindung ist das Lageraußenteil dabei auf der Seite, in welche das Lagerinnenteil eingeführt wird, zu der Umgebung offen, so dass ein Fluid in den Lagerspalt strömen kann, während gleichzeitig wenigstens eine weitere Öffnung in dem Lageraußenteil derart vorgesehen ist, dass sich eine zirkulierende Fluidströmung in dem Lagerspalt ausbildet. Mit anderen Worten kann bei jeder relativen Längsbewegung des Lagerinnenteils zu dem Lageraußenteil Fluid durch eine der beiden Öffnungen in den Lagerspalt gedrängt werden, der dann zur Schmierung des Gleitlagers dient.

Hinsichtlich der Zentriereigenschaften des erfindungsgemäßen Gleitlagers wird es bevorzugt, wenn das Lagerinnenteil als eine insbesondere in einem Behälter ortsfest fixierte Bodenlagerhülse ausgebildet ist. Das Lageraußenteil kann dann als eine mit einer Welle verbundene Führungshülse ausgebildet sein.

Die der Erfindung zugrunde liegende Aufgabe wird weiter mit einem vorzugsweise als Fermentationsreaktor ausgebildeten Reaktor gelöst, der ein Gehäuse zur Aufnahme eines zu durchmischenden Fluids und einen in diesem drehbaren Rührer mit einer Rührerwelle aufweist, die zumindest in einem Bodenlager innerhalb des Gehäuses gelagert ist. Erfindungsgemäß ist dieses Bodenlager als ein Gleitlager der eingangs genannten Art mit einem Lagerinnenteil, das eine zumindest bereichsweise ballige, konvexe Außenkontur aufweist, ausgebildet. Derartige Reaktoren weisen häufig eine Apparatehöhe von etwa 10 m und ein Volumen von 60 m³ auf, so dass sich Torsionsschwingungen und Biegeschwingungen sowie dadurch erzeugte Längsbewegungen der Wellenenden besonders stark auf das Bodenlager auswirken. Diese sich negativ auf die Lebensdauer auswirkenden Einflüsse können durch das erfindungsgemäße Gleitlager in einem Reaktor kompensiert werden.

Der erfindungsgemäße Reaktor eignet sich für die Verwendung des Bodenlagers als ein produktgeschmiertes Gleitlager. Mit anderen Worten kann das in dem Reaktor zu durchmischende Fluid unmittelbar zur Schmierung des Gleitlagers eingesetzt werden.

Üblicherweise sind Reaktoren, wie Fermentationsreaktoren, auf einem Gestell oder dergleichen mit einem Fermenter-Fundament gelagert. Hierbei kann es jedoch zu einem seitlichen Kippen des Reaktors kommen, wodurch eine Relativbewegung zwischen dem Reaktor und dem Rührer auftritt. Dies führt zu einer einseitigen Belastung des Bodenlagers und damit zu einem erhöhten Verschleiß. Nach einer besonders bevorzugten Ausführungsform der Erfindung wird es daher bevorzugt, wenn das Gehäuse des Reaktors auf einem Fermenter-Fundament gelagert ist, welches starr mit einem festen Untergrund, insbesondere einem Gehäusefundament oder dergleichen, verbunden ist.

Die Lebenszeit des Bodenlagers des Reaktors lässt sich dadurch weiter verbessern, dass die Rührwelle mit ihrem dem Bodenlager gegenüberliegenden Ende in einem antriebsseitigen Lager gelagert ist, welches zu dem Bodenlager derart fluchtend ausgerichtet ist, dass die Achsen der beiden Lager in radialer Richtung um weniger als etwa 0,01%, vorzugsweise um etwa 0,005%, des axialen Abstands der beiden Lager zueinander versetzt sind. Insbesondere wird es bevorzugt, wenn Getriebe, Wellenlager und Bodenlager mittels Vermessungstechnik auf +/-0,5 mm genau präzise miteinander fluchten.

In Versuchen wurde herausgefunden, dass sich das eingangs genannte Gleitlager überraschenderweise besonders gut als produktgeschmiertes Bodenlager eines Rührers zum Durchmischen einer belüfteten Fermentationslösung in einem Fermentationsreaktor eignet. Bei belüfteten Fermentationslösungen kommt es häufig zu Kavitationsproblemen, die die Lebensdauer des Bodenlagers neben dem Verschleiß in Folge von einem Verkanten der Lagerteile erheblich verringern. Durch die Verwendung des oben genannten Gleitlagers als Bodenlager ist es nun erstmals möglich, ein mit einer Fermentationslösung produktgeschmiertes Bodenlager in einem Fermentationsreaktor mit ausreichender Standzeit vorzusehen.

Die Erfindung wird nachfolgend anhand eines Ausführungsbeispiels und unter Bezugnahme auf die Zeichnung näher erläutert.

Es zeigen schematisch:
- Fig. 1: einen Schnitt durch einen erfindungsgemäßen Reaktor,
- Fig. 2: vergrößert ein Detail der Bodenbefestigung des Reaktors nach Fig. 1,
- Fig. 3: den unteren Bereich des Reaktors nach Fig. 1 mit einem erfindungsgemäßen Gleitlager bei niedriger Drehzahl, und
- Fig. 4: den unteren Bereich des Reaktors nach Fig. 1 mit einem erfindungsgemäßen Gleitlager bei hoher Drehzahl.

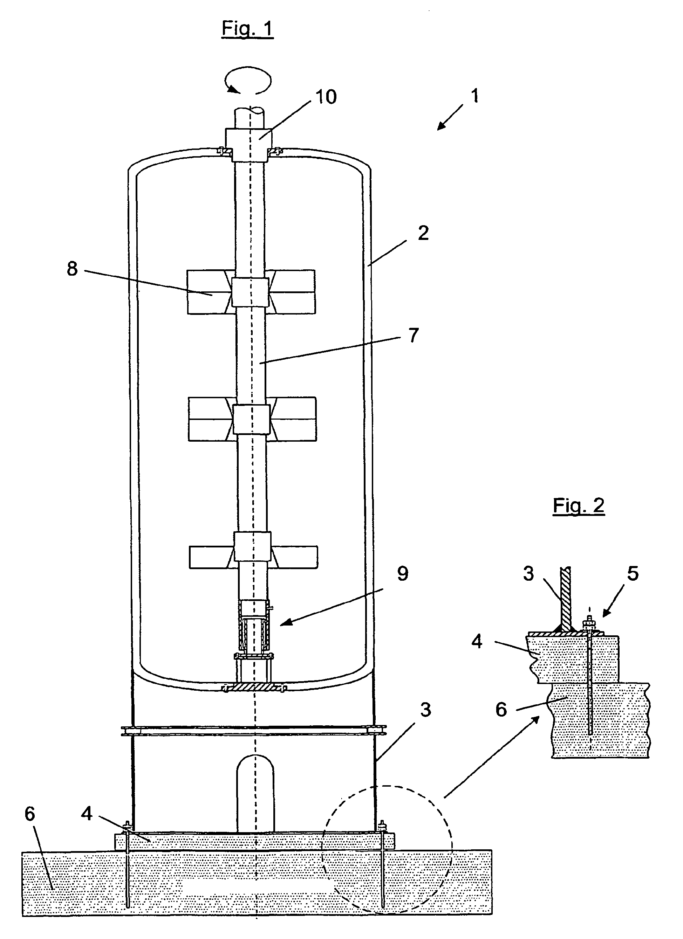

Der in Figur 1 dargestellte Reaktor 1 ist beispielsweise als ein Fermentationsreaktor zum Durchmischen einer Kulturlösung, beispielsweise einer Fermentationslösung, ausgebildet. Hierzu weist der Reaktor 1 ein näherungsweise zylindrisches Gehäuse 2 auf, welches auf einem Rahmen 3 gelagert ist, der wiederum auf einem Fermenter-Fundament 4 befestigt ist.

Wie aus der Darstellung der Figur 2 ersichtlich ist, ist der Rahmen 3 durch eine Verschraubung 5 sowohl mit dem Fermenter-Fundament 4 als auch mit einem Gehäusefundament 6 oder dergleichen Untergrund starr verbunden. Die Gefahr eines Kippens des gesamten Reaktors 1 wird hierdurch minimiert.

Innerhalb des Gehäuses 2 des Reaktors 1 ist zum Durchmischen beispielsweise einer Fermentationslösung ein Rührer vorgesehen, der im Wesentlichen durch eine sich in axialer Richtung des Gehäuses 2 erstreckende Rührerwelle 7 gebildet ist, an welcher mehrere Rührerarme 8 mit Paddeln oder dergleichen Mischerelementen vorgesehen sind.

Die Rührerwelle 7 ist innerhalb des Gehäuses 2 in einem Bodenlager 9 drehbar gelagert. An dem in Figur 1 oberen Ende des Gehäuses 2 ist ein weiteres Lager 10 angedeutet, welches in das Gehäuse 2 integriert oder außerhalb des Gehäuses 2 vorgesehen sein kann. Weiter ist ein in den Figuren nicht dargestellter Antrieb vorgesehen, mit welchem die Rührerwelle 7 in Rotation versetzt werden kann.

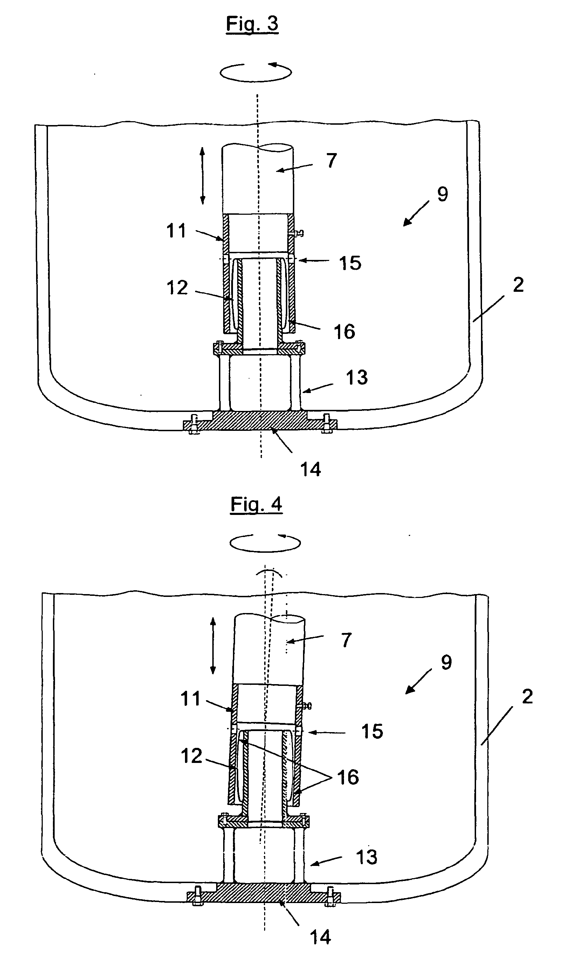

Das Bodenlager 9 ist in den Figuren 3 und 4 im Detail dargestellt. Dabei wird das Bodenlager 9 im Wesentlichen durch eine mit der Rührerwelle 7 verbundene Führungshülse 11, die ein Lageraußenteil bildet, sowie eine zapfenartige Bodenlagerhülse 12 gebildet, die als ein Lagerinnenteil in der Führungshülse 11 aufgenommen ist. Die Bodenlagerhülse 12 ist über eine Bodenlagerhalterung 13 und einen Bodenflansch 14 ortsfest in dem Gehäuse 2 des Reaktors 1 angeordnet.

Die Führungshülse 11 ist in der dargestellten Ausführungsform nach unten hin offen. Weiter sind in der Führungshülse 11 mehrere Zirkulationsöffnungen 15 vorgesehen, die das Innere der Führungshülse 11 ebenfalls mit dem Inneren des Gehäuses 2 in Strömungsverbindung bringen. Ein in dem Gehäuse 2 des Reaktors 1 befindliches Fluid, beispielsweise die Fermentationslösung, kann somit in den zwischen der Bodenlagerhülse 12 und der Führungshülse 11 ausgebildeten Lagerspalt eindringen. Hierdurch entsteht zwischen der Führungshülse 11 und der Bodenlagerhülse 12 ein Fluidfilm, der verhindert, dass eine trockene Reibung zwischen der Führungshülse 11 und der Bodenlagerhülse 12 stattfindet.

Wie der vergrößerten Darstellung der Figuren 3 und 4 zu entnehmen ist, ist die Außenkontur der Bodenlagerhülse 12 bereichsweise ballig und konvex gestaltet. In der dargestellten Ausführungsform ist diese ballige, konvexe Außenkontur der Bodenlagerhülse 12 als ein schlankes Ellipsoidsegment ausgebildet, das etwa in seiner Mitte einen Äquator aufweist. Die Bodenlagerhülse 12 kann dabei als ein separates, ggf. austauschbares Bauteil auf einem zapfenartigen Vorsprung der Bodenlagerhalterung 13 ausgebildet sein oder einstückig mit diesem verbunden sein.

Wie aus der Darstellung der Figur 3 weiter ersichtlich ist, ist die Rührerwelle 7 derart zu dem Bodenlager 9 ausgebildet, dass die Rührerwelle 7 im Stillstand im Wesentlichen mit dem Bodenlager 9 fluchtet. Bei niedrigen Drehzahlen treten dabei keine nennenswerten Biegeschwingungen auf, die zu einer Neigung der Rührerwelle 7 relativ zu der Bodenlagerhülse 12 führen. Die Rührerwelle 7 kann jedoch eine durch den Doppelpfeil in Fig. 3 angedeutete Längsbewegung relativ zu der Bodenlagerhalterung 13 ausführen. Hierbei bildet sich in dem Lagerspalt ein Fluidkeil 16 zur Schmierung der Führungshülse 11 und der Bodenlagerhülse 12. Bei einer Längsbewegung der Rührerwelle 7 wird dieser Fluidkeil 16 von der Bodenlagerhülse 12 vor sich hergeschoben und komprimiert, was der Kavitation entgegenwirkt.

Bei höheren Drehzahlen der Rührerwelle 7 kann zusätzlich zu der Längsbewegung auch ein in Figur 4 angedeuteter Winkelversatz durch Biegeschwingungen auftreten. Durch die ballige, konvexe Ausgestaltung der Außenkontur der Bodenlagerhülse 12 kann diese jedoch nicht in der Führungshülse 11 verkanten. Weiter bilden sich auch hierbei auf jeder Seite der Bodenlagerhülse 12 Fluidkeile 16 zur Schmierung der Bodenlagerhülse 12 und der Führungshülse 11 aus. Eine trockene Reibung der Führungshülse 11 an der Bodenlagerhülse 12 tritt somit nicht auf. Hierdurch wird die Lebensdauer des Bodenlagers 9 erheblich gesteigert.

### Bezugszeichenliste:

- 1: Reaktor
- 2: Gehäuse
- 3: Rahmen
- 4: Fermenter-Fundament
- 5: Verschraubung
- 6: Gehäusefundament
- 7: Rührerwelle
- 8: Rührerarm (Mischerelemente)
- 9: Bodenlager (Gleitlager)
- 10: weiteres Lager
- 11: Führungshülse (Lageraußenteil)
- 12: Bodenlagerhülse (Lagerinnenteil)
- 13: Bodenlagerhalterung
- 14: Bodenflansch
- 15: Zirkulationsöffnung
- 16: Fluidkeil

## Patentansprüche

1. Gleitlager, insbesondere Rührwerkbodenlager für einen Reaktor, mit einem hülsenförmigen Lageraußenteil (11), das eine zylindrische Innenkontur aufweist, und einem in diesem geführten, insbesondere zapfenartigen, Lagerinnenteil (12), wobei die Innenkontur des Lageraußenteils (11) derart an die Außenkontur des Lagerinnenteils (12) angepasst ist, dass zwischen diesen ein ringförmiger Lagerspalt zur Aufnahme eines als Schmiermittel wirkenden Fluids ausgebildet ist, und wobei das Schmiermittel das zu durchmischende Fluid ist, und das Lagerinnenteil (12) eine zumindest bereichsweise ballige, konvexe Außenkontur aufweist, **dadurch gekennzeichnet, dass** sich das Lagerinnenteil (12) und das Lageraußenteil (11) immer nur an einem Punkt berühren, der auf dem inneren Durchmesser abrollt.

2. Gleitlager nach Anspruch 1, **dadurch gekennzeichnet, dass** die ballige, konvexe Außenkontur des Lagerinnenteils (12) als ein schlankes Ellipsoidsegment ausgebildet ist.

3. Gleitlager nach einem der Ansprüche 1 oder 2, **dadurch gekennzeichnet, dass** der ballige, konvex ausgebildete Bereich der Außenkontur des Lagerinnenteils (12) derart ausgebildet ist, dass ein Äquator des balligen, konvex ausgebildeten Bereichs etwa in dessen Mitte angeordnet ist.

4. Gleitlager nach einem der vorhergehenden Ansprüche, **dadurch gekennzeichnet, dass** das Lageraußenteil (11) wenigstens eine Öffnung (15) zur Herstellung einer Strömungsverbindung zwischen dem Lagerspalt und der äußeren Umgebung (2) des Lageraußenteils (11) aufweist.

5. Gleitlager nach einem der vorhergehenden Ansprüche, **dadurch gekennzeichnet, dass** das Lagerinnenteil (12) als eine, insbesondere in einem Behälter (2), ortsfest fixierte Bodenlagerhülse ausgebildet ist.

6. Gleitlager nach einem der vorhergehenden Ansprüche, **dadurch gekennzeichnet, dass** das Lageraußenteil (11) als eine mit einer Welle (7) verbundene Führungshülse ausgebildet ist.

7. Reaktor, insbesondere Fermentationsreaktor, mit einem Gehäuse (2) zur Aufnahme eines zu durchmischenden Fluids und einem in diesem drehbaren Rührer mit einer Rührerwelle (7), die zumindest in einem Bodenlager (9) innerhalb des Gehäuses (2) gelagert ist, wobei das Bodenlager als ein Gleitlager nach einem der vorhergehenden Ansprüche ausgebildet ist.

8. Reaktor nach Anspruch 7, **dadurch gekennzeichnet, dass** das Gehäuse (2) auf einem Fermenter-Fundament (3, 4) gelagert ist, welches starr mit einem festen Untergrund, insbesondere einem Gehäusefundament (6), verbunden ist.

9. Reaktor nach einem der Ansprüche 7 bis 8, **dadurch gekennzeichnet, dass** die Rührerwelle (7) mit ihrem dem Bodenlager (9) gegenüberliegenden Ende in einem antriebsseitigen Lager (10) gelagert ist, welches zu dem Bodenlager (9) derart fluchtend ausgerichtet ist, dass die Achsen der beiden Lager (9, 10) in radialer Richtung um weniger als etwa 0,01 % des axialen Abstands der beiden Lager (9, 10) zueinander versetzt sind.

10. Verwendung eines Gleitlagers (9) nach einem der Ansprüche 1 bis 6 als produktgeschmiertes Bodenlager (9) eines Rührers (7) zum Durchmischen einer belüfteten Fermentationslösung in einem Fermentationsreaktor (1).

## Claims

1. Sliding bearing, in particular agitator bottom bearing for a reactor, having a sleeve-shaped bearing outer part (11), which has a cylindrical inner contour, and an, in particular pin-like, bearing inner part (12) guided in said bearing outer part, wherein the inner contour of the bearing outer part (11) is adapted to the outer contour of the bearing inner part (12) in such a way that an annular bearing gap is formed between them for receiving a fluid acting as a lubricant, and wherein the lubricant is the fluid which is to be mixed, and the bearing inner part (12) has a convex outer contour which is spherical at least in certain regions, **characterized in that** the bearing inner part (12) and the bearing outer part (11) only ever make contact at a point which rolls on the inner diameter.

2. Sliding bearing according to Claim 1, **characterized in that** the spherical, convex outer contour of the bearing inner part (12) is formed as a slender ellipsoid segment.

3. Sliding bearing according to either of Claims 1 and 2, **characterized in that** the spherical, convexly formed region of the outer contour of the bearing inner part (12) is formed in such a way that an equator of the spherical, convexly formed region is arranged approximately in the centre thereof.

4. Sliding bearing according to one of the preceding claims, **characterized in that** the bearing outer part (11) has at least one opening (15) for producing a flow connection between the bearing gap and the outer surroundings (2) of the bearing outer part (11).

5. Sliding bearing according to one of the preceding claims, **characterized in that** the bearing inner part (12) is designed as a bottom bearing sleeve which is fixed immovably, in particular in a container (2).

6. Sliding bearing according to one of the preceding claims, **characterized in that** the bearing outer part (11) is designed as a guide sleeve connected to a shaft (7).

7. Reactor, in particular fermentation reactor, having a housing (2) for receiving a fluid to be mixed and a stirrer which can be rotated therein and which has a stirrer shaft (7) which is mounted at least in a bottom bearing (9) within the housing (2), wherein the bottom bearing is designed as a sliding bearing according to one of the preceding claims.

8. Reactor according to Claim 7, **characterized in that** the housing (2) is mounted on a fermenter foundation (3, 4) which is rigidly connected to a fixed base, in particular a housing foundation (6).

9. Reactor according to either of Claims 7 and 8, **characterized in that** the stirrer shaft (7) is mounted by way of its end opposite the bottom bearing (9) in a drive-side bearing (10) which is aligned with the bottom bearing (9) in such a way that the axes of the two bearings (9, 10) are offset with respect to one another in the radial direction by less than approximately 0.01% of the axial spacing between the two bearings (9, 10).

10. Use of a sliding bearing (9) according to one of Claims 1 to 6 as a product-lubricated bottom bearing (9) of a stirrer (7) for mixing an aerated fermentation solution in a fermentation reactor (1).

## Revendications

1. Palier lisse, en particulier palier de fond d'un agitateur rotatif pour un réacteur, comprenant une partie extérieure de palier (11) en forme de douille, qui présente un contour intérieur cylindrique, et une partie intérieure de palier (12), notamment en forme de tourillon, guidée à l'intérieur de celle-ci, le contour intérieur de la partie extérieure de palier (11) étant adapté au contour extérieur de la partie intérieure de palier (12) de telle sorte qu'un interstice de palier de forme annulaire soit réalisé entre celles-ci pour recevoir un fluide agissant en tant que lubrifiant, le lubrifiant étant le fluide à mélanger, et la partie intérieure de palier (12) présentant un contour extérieur convexe, au moins en partie bombé, **caractérisé en ce que** la partie intérieure de palier (12) et la partie extérieure de palier (11) se contactent toujours seulement en un point qui roule sur le diamètre intérieur.

2. Palier lisse selon la revendication 1, **caractérisé en ce que** le contour extérieur convexe bombé de la partie intérieure de palier (12) est réalisé sous forme de segment ellipsoïde mince.

3. Palier lisse selon l'une quelconque des revendications 1 ou 2, **caractérisé en ce que** la région bombée, réalisée sous forme convexe, du contour extérieur de la partie intérieure de palier (12) est réalisée de telle sorte qu'un équateur de la région bombée, réalisée sous forme convexe, soit disposé approximativement en son milieu.

4. Palier lisse selon l'une quelconque des revendications précédentes, **caractérisé en ce que** la partie extérieure de palier (11) présente au moins une ouverture (15) pour établir une liaison d'écoulement entre l'interstice de palier et l'environnement extérieur (2) de la partie extérieure de palier (11).

5. Palier lisse selon l'une quelconque des revendications précédentes, **caractérisé en ce que** la partie intérieure de palier (12) est réalisée sous forme de douille de palier de fond fixe, notamment fixée dans un récipient (2).

6. Palier lisse selon l'une quelconque des revendications précédentes, **caractérisé en ce que** la partie extérieure de palier (11) est réalisée sous forme de douille de guidage connectée à un arbre (7).

7. Réacteur, en particulier réacteur de fermentation, comprenant un boîtier (2) pour recevoir un fluide à mélanger et un agitateur pouvant tourner dans celui-ci, avec un arbre d'agitateur (7), qui est supporté au moins dans un palier de fond (9) à l'intérieur du boîtier (2), le palier de fond étant réalisé sous forme de palier lisse selon l'une quelconque des revendications précédentes.

8. Réacteur selon la revendication 7, **caractérisé en ce que** le boîtier (2) est supporté sur un socle de fermenteur (3, 4) qui est connecté rigidement à un subjectile fixe, en particulier un socle de boîtier (6).

9. Réacteur selon l'une quelconque des revendications 7 à 8, **caractérisé en ce que** l'arbre d'agitateur (7) est supporté avec son extrémité opposée au palier de fond (9) dans un palier (10) du côté de l'entraînement, lequel est orienté vers le palier de fond (9) en affleurement, de telle sorte que les axes des deux paliers (9, 10) soient décalés l'un par rapport à l'autre dans la direction radiale de moins d'environ 0,01 % de la distance axiale entre les deux paliers (9, 10).

10. Utilisation d'un palier lisse (9) selon l'une quelconque des revendications 1 à 6, en tant que palier de fond (9) d'un agitateur (7) lubrifié par un produit, pour le mélange d'une solution de fermentation ventilée dans un réacteur de fermentation (1).
